# EUROPEAN PATENT APPLICATION

(11) **EP 3 401 567 A1**
(43) Date of publication of application: **14.11.2018**
(21) Application number: 17170515.5
(22) Date of filing: 10.05.2017
(51) Int. Cl.: F16D 66/02

(54) **MONITORING OF CARGO WAGON BRAKE PADS**

(71) Applicant: Ovinto cvba, 9850 Nevele (BE)
(72) Inventor: RONSE, Frederick, 8300 Knokke-Heist (BE)
(74) Representative: Brantsandpatents bvba

(57) **Abstract**

A brake pad or shoe wear detector (1) for a cargo wagon or for a monitoring system of a cargo wagon, said brake pad or shoe comprising a friction material (10), said brake pad or shoe adapted for clamping a brake disc or drum, the wear detector (1) being at least partially embedded in said friction material, the wear detector comprising an element capable of electric contact with the brake disc or drum as a result of friction material wear, changing the state of an electrical circuit giving notice of the need to change the brake pad or shoe, wherein the brake pad or shoe wear detector comprises a wireless transmitter configured to wirelessly transmit said notice in an electronic signal.

## Description

### Technical field

The invention pertains to the technical field of brakes for vehicles such as cargo wagons.

### Background

In the sphere of brake monitoring systems applied to mobile vehicles both for road transport and for rail transport or other applications, use is made of brake wear detectors that warn when the thickness of the friction element has reached a level that is considered critical and it therefore becomes necessary to change the friction element in order to assure a perfect operation of the transport vehicle.

Many prior art devices envisage the addition of a conductor wire embedded in the interior of the friction material which is included there during the manufacturing process of the brake shoe or pad. A connector is provided at the end of the conductor wire; upon installation on the vehicle, the connector is used for making connection to further portions of the brake monitoring system by means of a cable.

Other prior art devices permit fitting to brake shoes or pads prior to their installation on the vehicle, without the system having to be incorporated during the manufacture of the friction material. Also these systems are provided with a connector; upon installation on the vehicle, the connector is used for making connection to further portions of the brake monitoring system by means of a cable. Some of these prior art systems are adapted so that the wear on the friction material causes the device to come into contact with the brake disc or drum, which is when the circuit between the device and the brake disc or drum is closed.

EP 1 798 439 discloses a wear detector for brake shoes or pads that permits fitting to brake shoes or pads prior to installation. The wear detector gives notice of wear when the electrical circuit of the device is closed. The wear detector comprises a long, preferably-T-shaped body. The two opposing arms of the body are connected in a groove that is provided in the friction material of the brake shoe or pad, while the central portion thereof forms the element that comes into contact with the brake disc when the friction material of the associated shoe or pad is worn.

EP 1 270 983 discloses a wear sensor with the addition of a conductor wire embedded in the interior of the friction material which is included there during the manufacturing process of the brake shoe or pad. The wear sensor gives notice of wear when the electrical circuit of the device is open. The wear sensor is operable to detect wear of the braking member in service. The wear sensor comprises a sensor head mounted so that a wear surface of the sensor head is substantially flush with the engagement surface of the braking member and engages the braked member when said engagement surface does so that said engagement and wear surfaces are subject to substantially equal wear.

A problem with devices according to both EP 1 798 439 and EP 1 270 983 is that they are complicated in use and installation, as described further in this document.

Further related concepts are found in US 6,360,850 and EP 1 148 267. They suffer the same problems as EP 1 798 439 and EP 1 270 983, and further have the problem that they do not relate to railway transport and are not adapted to brakes for cargo wagons.

There remains a need in the art for an improved monitoring of wear of brake pads and shoes. The present invention aims to resolve at least some of the problems mentioned above.

### Summary of the invention

In a first aspect, the present invention provides a brake pad or shoe wear detector for a cargo wagon or for a monitoring system of a cargo wagon, said brake pad or shoe comprising a friction material, said brake pad or shoe adapted for clamping a brake disc or drum, the wear detector being at least partially embedded in said friction material, the wear detector comprising an element capable of electric contact with the brake disc or drum as a result of friction material wear, changing the state of an electrical circuit giving notice of the need to change the brake pad or shoe, wherein the brake pad or shoe wear detector comprises a wireless transmitter configured to wirelessly transmit said notice in an electronic signal.

The advantage of such a wear detector, intended for a break pad or a break shoe, is that no cable is required for transferring the notice to further portions of a system for wear monitoring. This simplifies the design of such a monitoring system. Particularly in the case that a large number of brake pads or shoes is monitored by the same central unit, an excessive amount of cables can be avoided through the present invention. This is in stark contrast with devices according to both EP 1 798 439 and EP 1 270 983. These devices are complicated in installation and use, since they require a wired connection between the brake pad or shoe and further portions of the brake monitoring system. This implies that the rest of the brake monitoring system has to be placed in close proximity to the brake pad or shoe, or that a cable of considerable length has to be led to another part of the vehicle. Especially when working with older vehicles and/or unpowered vehicles, there are no wire guides provided, and the cable has to be led over the surface of the vehicle, with increased risk of being torn. Importantly, devices according to both EP 1 798 439 and EP 1 270 983 may also cause malfunction of the brake pad or shoe, since the cable may interfere with the brake mechanism, causing a threat to vehicle safety.

Another related advantage lies in the modularity of the invention, enable flexible use of the detector. Since the transfer of data is performed wirelessly, the data can be read out from any side of the vehicle, and need not be sent to a receiver present on the vehicle itself. For instance, an operator inspecting the brake pad or shoe may be standing next to the vehicle and receive the notice from there. Another example may be a receiver that is installed near parked cargo wagons. In such a case, a brake pad or shoe wear detector according to the present invention enables that the wear of the brake pads or shoes is automatically "audited" while the cargo wagon is parked. In a system according to the prior art, such "auditing" would require a wired connection or a much more complicated system.

In a second aspect, the present invention provides a monitoring system for monitoring the wear of at least one brake pad or shoe mounted on a cargo wagon, preferably at least two brake pads or shoes, said monitoring system comprising a brake pad or shoe wear detector according to the present invention, a brake communication module adapted for receiving said electronic signal comprising said notice, and a signaling means such as a sound alarm or visual alarm for alerting an operator.

The advantages are similar to those of a brake pad or shoe wear detector according to the present invention. A further advantage of such a monitoring system lies in that it may automatically detect and easily follow up maintenance of the brake pads or shoes. Particularly, the operator is actively incited to action by the monitoring system. This is especially useful in the context of railway wagons for transporting hazardous goods.

In a third aspect, the present invention provides an unpowered cargo wagon comprising a brake pad or shoe wear detector according to the present invention and/or a monitoring system according to the present invention. Due to the fact that the cargo wagon is unpowered, it is particularly advantageous that the notice is comprised in an electronic signal that is transmitted wirelessly. Indeed, since an unpowered cargo wagon is not accommodated for cabling and guiding of cabling, a modular brake pad or shoe wear detector and related system according to the present invention is better adapted to the needs of unpowered cargo wagons.

In a fourth aspect, the present invention provides a brake pad or shoe comprising a brake pad or shoe wear detector according to the present invention.

Further preferred embodiments and their advantages are provided in the detailed description and the claims.

### Description of figures

**Figure 1** illustrates an example brake pad relating to the present invention.
**Figure 2** shows a plan and sectional view of a first example embodiment of a brake pad wear detector according to the present invention.
**Figure 3** shows a plan and sectional view of a second example embodiment of a brake pad wear detector according to the present invention.
**Figure 4** shows a plan and sectional view of a third example embodiment of a brake pad wear detector according to the present invention.
**Figure 5** shows a plan and sectional view of a fourth example embodiment of a brake pad wear detector according to the present invention.

### Detailed description of the invention

In a first aspect, the present invention provides a brake pad or shoe wear detector for a cargo wagon or for a monitoring system of a cargo wagon, said brake pad or shoe comprising a friction material, said brake pad or shoe adapted for clamping a brake disc or drum, the wear detector being at least partially embedded in said friction material, the wear detector comprising an element capable of electric contact with the brake disc or drum as a result of friction material wear, changing the state of an electrical circuit giving notice of the need to change the brake pad or shoe, the brake pad or shoe wear detector comprises a wireless transmitter configured to wirelessly transmit said notice in an electronic signal.

The invention may relate to a brake pad or a brake shoe. In case of a brake pad, the brake pad typically belongs to a disc brake system, whereby the brake pad is pressed against a brake disc. In case of a brake shoe, the brake shoe typically belongs to a drum brake system, whereby the brake shoe is pressed against a brake drum. However, in the context of the present invention, the difference between brake pad and brake shoe is often irrelevant, as the invention applies in both cases, and in fact to any friction-based braking system.

In a preferred embodiment of the present invention, said changing of the state of said electrical circuit concerns the closing of said electrical circuit. This is advantageous because it is simple and allows for a very energy-efficient implementation, particularly in the preferred embodiment wherein the brake pad or shoe wear detector comprises a battery and is powered entirely by the battery. Hereby, the closing of the circuit may concern an electrical connection of the detector with the ground. This connection is realized when the wear of the friction material causes a ground contact present on the detector to come into contact with the brake disc or drum, thereby realizing an electrical contact with the ground through the brake disc or drum. This is particularly advantageous since it allows a preferred embodiment wherein the detector is a mere "sleeping" tag that consumes very limited power until it is woke by said electrical contact with the ground. As soon as the detector is awake, in a related preferred embodiment, it sends at least one notice, and preferably repeatedly sends said notice, until a certain stopping condition is reached, such as a fixed number of notices, a certain battery level, or battery depletion. This allows the tag to be "sleeping" for e.g. 1, 2 or even 5 years, either being in use or not, to only then turn active. Another related advantage is that this allows avoiding that an electrical conductor has to be broken entirely before the notice can be given. This avoids the situation that damage is caused to the brake disc or brake drum or other parts of the cargo wagon due to the breaking of the conductor. In a related embodiment, said changing of the state of said electrical circuit concerns the opening of said electrical circuit. This may be the case in an embodiment where a conductor is embedded in the friction material and wear is detected when this conductor is broken due to friction with the brake drum or disc, causing the electrical circuit to which the conductor is connected is opened. Hereby, preferably, the conductor embedded in the interior of the brake pad friction material is of a softer material than the actual friction material of the pad and is made of a material that does not damage the brake disc or drum.

In a preferred embodiment, said brake pad or shoe wear detector comprises an identification of the brake pad or shoe, preferably a unique identification, and said electronic signal comprises said identification. This is advantageous, because it allows to immediately indicate where a problem with the brakes occurs. This identification can be basic (e.g. indicating only that the problem relates to a brake pad or shoe at the rear or the front of the vehicle) but is preferably unique. This allows to maintain a full track of each braking pad or shoe. Moreover, because of the specific setup of the detection and the unique identification of the braking pads or shoes, every single braking pad or shoe can be monitored by further parts of a monitoring system, even if all further parts of the monitoring system are not mounted on the cargo wagon but instead mounted on another cargo wagon, or installed at a fixed location. Particularly, in an embodiment with unique identification, the present invention may even be used to identify cargo wagons as a whole. Particularly when the cargo wagons are unpowered, the present invention may provide the only means to do such.

In a preferred embodiment, said cargo wagon concerns an unpowered cargo wagon. As mentioned also elsewhere in this document, the present invention is particularly useful in this case due to the modularity and/or autonomy of the detector. Indeed, since an unpowered cargo wagon is not accommodated for cabling and guiding of cabling, a modular brake pad or shoe wear detector and related system according to the present invention is better adapted to the needs of unpowered cargo wagons.

In another preferred embodiment, said brake pad or shoe wear detector comprises a battery or equivalent power source such as an energy harvesting power module. This is advantageous because it further enhances modularity and autonomy, which is particularly useful when the cargo wagon is unpowered. Energy harvesting may contribute partly to or may even constitute power supply, and may be based on motion energy and/or solar energy and/or wind energy.

According to yet another embodiment, the brake pad or shoe wear detector is adapted for operating completely wirelessly at least during the transmission of said notice comprised in said electronic signal. This is advantageous because it further enhances autonomy, causing a higher reliability in operation.

In a preferred embodiment, said brake pad or shoe comprises a support surface carrying said friction material, in that said friction material comprises a friction surface for making contact with said brake disc or drum, and in that said brake pad or shoe wear detector is completely contained within a volume defined between said support surface and said friction surface. This is particularly advantageous if the detector is adapted for operating completely wirelessly. In this case, no cables are running to or from the brake, and the detector is very compact, ensuring that the brake mechanism is not hampered in any way by the detector. This is beneficial for overall safety and ease of installation.

In another preferred embodiment, said brake pad or shoe wear detector is completely surrounded by said friction surface and/or said support surface. This is advantageous because it creates a protective area around the detector, which prevents damage to the detector during installation. Since the detector may be invisible as a result, preferably, identification is possible via said electronic signal.

In yet another embodiment, said brake pad or shoe wear detector is further adapted to receiving a wake-up notice, preferably comprised in an electronic wake-up signal that is transmitted wirelessly, said wake-up notice triggering the transmission by said brake pad or shoe wear detector of a status signal comprising a status of said brake pad or shoe and/or said identification. In a further preferred embodiment, said status may also indicate whether the battery is low. This is advantageous since it eases maintenance. Also, it allows to check the state of the detector at certain critical moments, e.g. at the time when the brake pad or brake shoe is installed.

In a second aspect, the present invention provides a monitoring system for monitoring the wear of at least one brake pad or shoe mounted on a cargo wagon, preferably at least two brake pads or shoes, said monitoring system comprising a brake pad or shoe wear detector according to the present invention, a brake communication module adapted for receiving said electronic signal comprising said notice, and a signaling means such as a sound alarm or visual alarm intended for an operator.

In a preferred embodiment of said system, said signaling means comprising a satellite communication module adapted to send an alert to a remote location, said alert comprising said notice and/or said status and/or said identification and/or a brake pad or shoe count. This is advantageous for monitoring. Hereby, the monitoring of the brake pad count or brake shoe count may be particularly advantageous since it allows identifying problems with the detection of one or more of the brake pads or shoes. Such problems may relate to the use of a brake pad or shoe lacking a detector, or it may relate to a broken detector or a detector with depleted battery. For reasons of safety, it is advantageous to identify such problems early.

In a preferred embodiment of said system, said alert is sent when the number of brake pads or shoes for which a notice has been received exceeds a predefined limit. This is advantageous for discriminating the most hazardous situations from the standard maintenance problems.

In another preferred embodiment of the system, said monitoring system further comprises a satellite positioning module, whereby said alert comprises a position of said cargo wagon. The satellite positioning may be based on any Global Navigation Satellite System (GNSS), such as GPS, GLONASS, Galileo or Beidou. This is advantageous because it allows identifying where a maintenance operation is to be executed.

In another preferred embodiment, said cargo wagon is an unpowered cargo wagon, and in that said monitoring system is mounted entirely on said unpowered cargo wagon. This is advantageous because it provides a wagon without electronic maintenance means with an adequate and autonomous solution.

In another preferred embodiment, said monitoring system comprises a mobile device, said mobile device comprising the brake communication module of said monitoring system, the mobile device preferably further comprising at least one of the following modules of said monitoring system: the satellite communication module, the satellite positioning module. This is advantageous because it allows an operator to manually or automatically inspect the state of the brakes by means of a mobile device, preferably a hand-held mobile device.

In another preferred embodiment, the monitoring system comprises a logging module that stores information with respect to the status of the brake pads or shoes over time. This allows to keep a full log of historical information, which is advantageous because it enhances maintenance.

The invention is further described by the following non-limiting examples which further illustrate the invention, and are not intended to, nor should they be interpreted to, limit the scope of the invention.

The present invention will be now described in more details, referring to examples that are not limitative.

### Examples

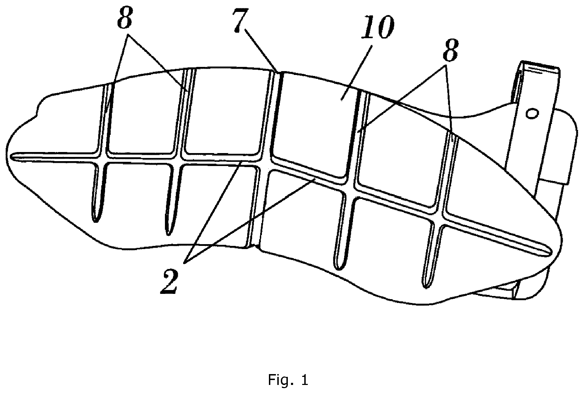

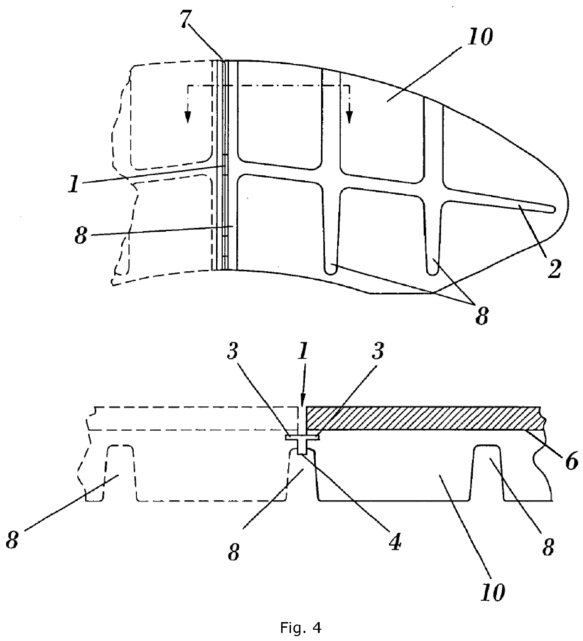

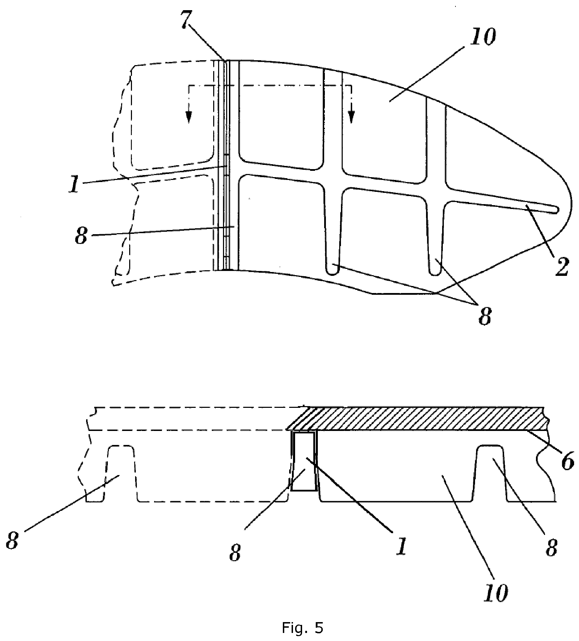

Figure 1 illustrates an example brake pad relating to the present invention. The friction material 10 is attached to a support surface 6 belonging to said brake pad, which is elongate along a length direction. The friction material 10 comprises a friction surface comprising a plurality of grooves 2, 7, 8. A medial cross groove 7 is flanked by a plurality of lateral cross grooves 8 essentially orthogonal with respect to said length direction. A longitudinal groove 2 runs across the length direction of the brake pad. In a preferred embodiment, the medial cross groove 7 has a larger depth than the lateral cross grooves 8. In a further preferred embodiment, the medial cross groove 7 represents a cut-out with respect to the friction material 10, preferably resulting in the support surface 6 to be uncovered. Hereby, note that the support surface may extend in one unified section over all friction material 10, as illustrated in Figure 5, but may also comprise more than one section. In the case of two sections, the boundary preferably extends along the medial cross groove 7, as illustrated in Figure 4.

The braking pad may comprise all grooves 2, 7, 8 but may also lack some of said grooves 2, 7, 8. In one embodiment, the braking pad comprises the medial cross groove 7 but not the other grooves 2, 8. In another embodiment, none of the grooves 2, 7, 8 are present, and the friction surface is essentially a smooth curve. Further, the example is given for a brake pad but in an alternative embodiment, a brake shoe is considered.

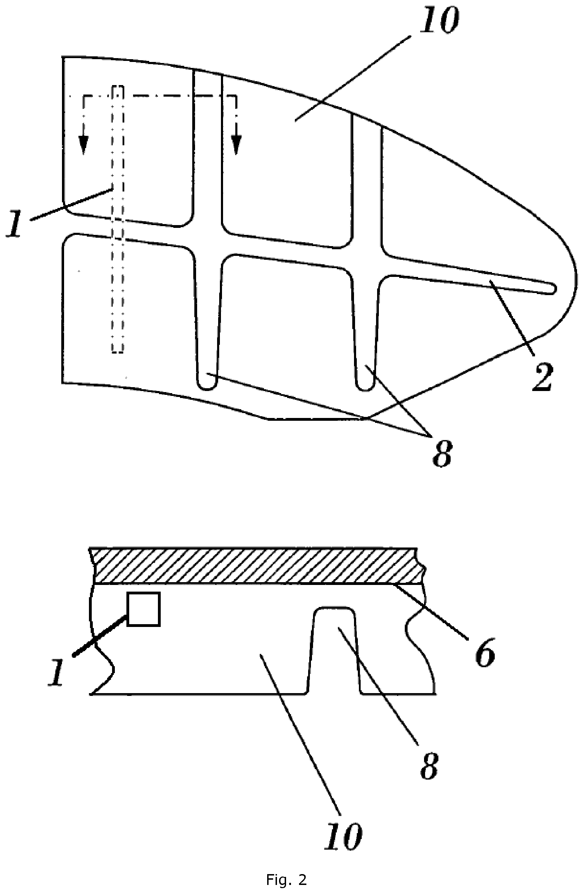

Figure 2 shows a plan and sectional view of a first example embodiment of a brake pad wear detector 1 according to the present invention. In this first example embodiment, the brake pad wear detector 1 extends beneath the friction surface and within the friction material 10, being completely embedded in it, without touching the support surface 6. As such, the detector is brought into the friction material preferably during manufacturing. In this example, the detector 1 extends in a direction orthogonal to the length direction but this may in fact be any direction, including the length direction. Such an embodiment may result in a partially visible detector 1 visible only though the longitudinal groove 2, or in a completely invisible detector 1. The detector comprises an element capable of electric contact with the brake disc or drum as a result of friction material wear, changing the state of an electrical circuit giving notice of the need to change the brake pad or shoe. The notice is comprised in an electronic signal that is transmitted wirelessly.

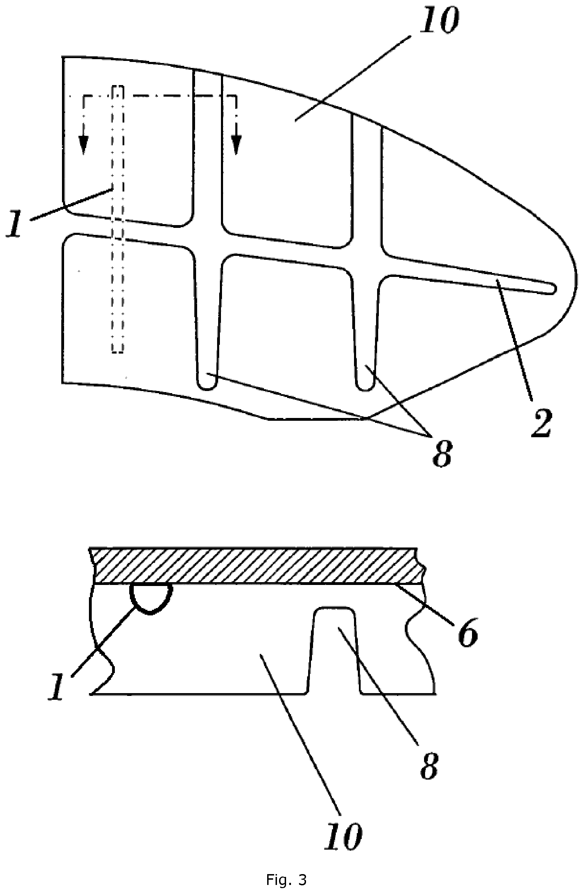

Figure 3 shows a plan and sectional view of a second example embodiment of a brake pad wear detector according to the present invention. In this second example embodiment, the brake pad wear detector 1 extends beneath the friction surface and within the friction material 10, but is not completely embedded in it, since it touches the support surface 6. Also in this example, the detector 1 extends in a direction orthogonal to the length direction but this may in fact be any direction, including the length direction. Such an embodiment may result in a partially visible detector 1 visible only though the longitudinal groove 2, or in a completely invisible detector 1. The detector comprises an element capable of electric contact with the brake disc or drum as a result of friction material wear, changing the state of an electrical circuit giving notice of the need to change the brake pad or shoe. The notice is comprised in an electronic signal that is transmitted wirelessly. A possible advantage when compared to the first example embodiment is the enhanced mechanical support provided by the support surface 6. Also, the detector need not be brought into the friction material 6 during manufacturing but may be mounted later on by being inserted in a mounting groove with suitable dimensions.

Figure 4 shows a plan and sectional view of a third example embodiment of a brake pad wear detector according to the present invention. In this third example embodiment, the brake pad wear detector 1 does not extend beneath the friction surface but rather is positioned next to it. The support surface 6 comprises two sections with a boundary extending along the medial cross groove 7. The detector 1 comprises a T-shaped elongated body and has two projecting fins 3, which are engaged with appropriate mounting grooves in the friction material 10. As such, this third example embodiment is particularly suitable for being installed after manufacturing. Also in this example, the detector 1 extends in a direction orthogonal to the length direction but this may in fact be any direction, including the length direction. The detector comprises an arm 4 which comes into contact with the brake disc (or, alternatively, brake drum) when the friction material incorporated into the brake pad is worn down. As such, the arm 4 is an example of a ground contact capable of electric contact with the brake disc or drum as a result of friction material wear, changing the state of an electrical circuit giving notice of the need to change the brake pad or shoe. The notice is comprised in an electronic signal that is transmitted wirelessly.

Figure 5 shows a plan and sectional view of a fourth example embodiment of a brake pad wear detector according to the present invention. Also in this fourth example embodiment, the brake pad wear detector 1 does not extend beneath the friction surface but rather is positioned next to it. The support surface 6 consists of a single section. The detector 1 lies within the medial cross groove 7 which provides a cut-out in the friction material 10. As such, the detector 1 is in contact with the support surface 6 and may be attached to it, preferably by gluing. Also, the detector 1 is flanked at two sides by friction material 10, whereby the medial cross groove 7 is advantageously shaped to receive the detector 1, preferably clamp the detector 1. Hereby, the clamping may be such that attachment of the device 1 to the support surface 6 is not necessary. As such, also this fourth example embodiment is particularly suitable for being installed after manufacturing. Also in this example, the detector 1 extends in a direction orthogonal to the length direction but this may in fact be any direction, including the length direction. The detector may come into contact with the brake disc (or, alternatively, brake drum) when the friction material incorporated into the brake pad is worn down. As such, contact with the brake disc or drum as a result of friction material wear may cause changing the state of an electrical circuit giving notice of the need to change the brake pad or shoe. The notice is comprised in an electronic signal that is transmitted wirelessly.

It is supposed that the present invention is not restricted to any form of realization described previously and that some modifications can be added to the presented example of fabrication without reappraisal of the appended claims. For example, the present invention has been described referring to cargo wagons, but it is clear that the invention can be applied to other vehicles such as passenger trains, metro wagons, cars, buses, trucks, bikes, motorcycles and any other vehicle using brakes with brake pads or brake shoes.

## Claims

1. A brake pad or shoe wear detector for a cargo wagon or for a monitoring system of a cargo wagon, said brake pad or shoe comprising a friction material, said brake pad or shoe adapted for clamping a brake disc or drum, the wear detector being at least partially embedded in said friction material, the wear detector comprising an element capable of electric contact with the brake disc or drum as a result of friction material wear, changing the state of an electrical circuit giving notice of the need to change the brake pad or shoe, **characterized in that**, the brake pad or shoe wear detector comprises a wireless transmitter configured to wirelessly transmit said notice in an electronic signal.

2. A brake pad or shoe wear detector according to previous claim 1, **characterized in that**, said changing of the state of said electrical circuit concerns the closing of said electrical circuit.

3. A brake pad or shoe wear detector according to claim 1, **characterized in that**, said changing of the state of said electrical circuit concerns the opening of said electrical circuit.

4. A brake pad or shoe wear detector according to any of the previous claims 1 to 3, **characterized in that**, said brake pad or shoe wear detector comprises an identification of the brake pad or shoe, preferably a unique identification, and **in that** said electronic signal comprises said identification.

5. A brake pad or shoe wear detector according to any of the previous claims 1 to 4, **characterized in that**, said cargo wagon concerns an unpowered cargo wagon.

6. A brake pad or shoe wear detector according to any of the previous claims 1 to 5, **characterized in that**, said brake pad or shoe wear detector comprises a battery or equivalent power source such as an energy harvesting power module.

7. A brake pad or shoe wear detector according to the previous claim 6, **characterized in that**, said brake pad or shoe wear detector is adapted for operating completely wirelessly at least during the transmission of said notice comprised in said electronic signal, preferably wherein said brake pad or shoe comprises a support surface carrying said friction material, **in that** said friction material comprises a friction surface for making contact with said brake disc or drum, and **in that** said brake pad or shoe wear detector is completely contained within a volume defined between said support surface and said friction surface, more preferably wherein said brake pad or shoe wear detector is completely surrounded by said friction surface and/or said support surface.

8. A brake pad or shoe wear detector according to any of the previous claims 1 to 7, **characterized in that**, said brake pad or shoe wear detector is further adapted to receiving a wake-up notice, preferably comprised in an electronic wake-up signal that is transmitted wirelessly, said wake-up notice triggering the transmission by said brake pad or shoe wear detector of a status signal comprising a status of said brake pad or shoe and/or said identification.

9. A monitoring system for monitoring the wear of at least one brake pad or shoe mounted on a cargo wagon, preferably at least two brake pads or shoes, said monitoring system comprising a brake pad or shoe wear detector according to any of the previous claims 1 to 8, a brake communication module adapted for receiving said electronic signal comprising said notice, and a signaling means such as a sound alarm or visual alarm intended for an operator.

10. A monitoring system according to the previous claim 9, **characterized in that**, said signaling means comprises a satellite communication module adapted to send an alert to a remote location, said alert comprising said notice and/or said status and/or said identification and/or a brake pad or shoe count.

11. The monitoring system according to the previous claims 9 and 10, **characterized in that**, said alert is sent when the number of brake pads or shoes for which a notice has been received exceeds a predefined limit.

12. The monitoring system according to any of the previous claims 9 to 11, **characterized in that**, said monitoring system further comprises a satellite positioning module, and **in that** said alert comprises a position of said cargo wagon.

13. The monitoring system according to any of the previous claims 9 to 12, **characterized in that**, said cargo wagon is an unpowered cargo wagon, and **in that** said monitoring system is mounted entirely on said unpowered cargo wagon.

14. The monitoring system according to the previous claims 9 to 13, **characterized in that**, said monitoring system comprises a mobile device, said mobile device comprising the brake communication module of said monitoring system, the mobile device preferably further comprising at least one of the following modules of said monitoring system: the satellite communication module, the satellite positioning module.

15. An unpowered cargo wagon comprising a brake pad or shoe wear detector according to any of the previous claims 1 to 8 and/or a monitoring system according to any of the previous claims 9 to 14.
